**Europäisches Patentamt**

**European Patent Office**

**Office européen des brevets**

(19)

(11) Veröffentlichungsnummer: **0 212 043**
A1

# (12) EUROPÄISCHE PATENTANMELDUNG

(21) Anmeldenummer: **86100700.3**

(22) Anmeldetag: **20.01.86**

(51) Int. Cl.⁴: **B 01 D 53/36**, B 01 J 23/90

(30) Priorität: **07.05.85 DE 3516359**

(43) Veröffentlichungstag der Anmeldung: **04.03.87**
**Patentblatt 87/10**

(84) Benannte Vertragsstaaten: **AT BE CH FR GB IT LI LU NL SE**

(71) Anmelder: **DIDIER-WERKE AG, Lessingstrasse 16-18, D-6200 Wiesbaden (DE)**

Anmelder: **Didier Engineering GmbH, Alfredstrasse 28 Postfach 10 09 45, D-4300 Essen 1 (DE)**

(72) Erfinder: **Laue, Karl Heinrich, Bergische Strasse 41, D-4320 Hattingen 16 (DE)**
Erfinder: **Flockenhaus, Claus, Prof. Dr., Tersteegenweg 16, D-4300 Essen 1 (DE)**
Erfinder: **Hackler, Erich, Kettwiger Weinberg 6, D-4300 Essen 18 (DE)**
Erfinder: **Levkov, Blagoje, Dr., Rudolf-Vogt-Strasse 41, D-6200 Wiesbaden (DE)**
Erfinder: **Grimm, Daniel, Hauptstrasse 10, D-6229-Schlangenbad-Bärstadt (DE)**
Erfinder: **Kalner, Hartmut, Dr., Sauerbruchstrasse 1a, D-6200 Wiesbaden 12 (DE)**
Erfinder: **Stein, Hermann, Auf dem Köppel 2, D-6702 Bad Dürkheim (DE)**
Erfinder: **Bühler, Hans-Eugen, Prof.-Dr., Kastanienweg 3c, D-6240 Königstein 3 (DE)**

(74) Vertreter: **Brückner, Raimund, c/o Didier-Werke AG Lessingstrasse 16-18, D-6200 Wiesbaden (DE)**

(54) Verfahren zum Entfernen von Stickoxiden und Russ aus Abgasen von Schwerölmaschinen oder Schwerölfeuerungen.

(57) Die Erfindung bezieht sich auf ein Verfahren zum Entfernen von Stickoxiden und Ruß aus Abgasen von Schwerölmaschinen oder Schwerölfeuerungen mittels Freipassagen-Katalysatoren bei erhöhten Temperaturen unter Zugabe von Ammoniak in den Abgasstrom vor den Katalysatoren. Um das Verfahren wirksamer zu gestalten, wird vorgeschlagen, daß der sich an den Katalysatorflächen ansetzende Ruß durch Abbrennen und/oder durch Beimischen von Sand, Asche oder dergleichen Abriebgemenge in den Abgasstrom vor den Katalysatoren durch Reibwirkung entfernt wird.

0212043

KXR/Ke/Sc
PA 3492

DIDIER ENGINEERING GMBH
Alfredstraße 28
4300 Essen 1

## Verfahren zum Entfernen von Stickoxiden und Ruß aus Abgasen von Schwerölmaschinen oder Schwerölfeuerungen

Die Erfindung bezieht sich auf ein Verfahren zum Entfernen von Stickoxiden und Ruß aus Abgasen von Schwerölmaschinen oder Schwerölfeuerungen mittels Freipassagen-Katalysatoren bei erhöhten Temperaturen unter Zugabe von Ammoniak in den Abgasstrom vor den Katalysatoren.

Abgase von Schwerölmaschinen oder Schwerölfeuerungen sind mit erheblichen Mengen an Stickoxiden und Ruß (Bacherach 5-7) belastet. Stickoxide werden beispielsweise seit etwa 1965 über einen Eisenoxid-Chromoxid-Katalysator unter Zugabe entsprechender Mengen Ammoniak aus Rauchgasen entfernt. Die Temperaturen betragen am Katalysator etwa 280 bis 350° C. Es hat sich gezeigt, daß Rußpartikel sich dabei am Katalysator ansammeln und diesen damit mit der Zeit verstopfen. Auch bei Verwendung von Schüttkatalysatoren zeigt sich trotz Abbrennen des Rußes eine bleibende Verstopfung, weil der Ruß aus Schwerölen mit unverbrennlichen Bestandteilen verunreinigt ist (z.B. Vanadiumpentoxid, Nickeloxid, Asche, usw.). Diese Bestandteile verstopfen die Schüttung des Katalysators unausbleiblich, so daß die erwünschte Stickoxidbeseitigung leidet.

Aufgabe der vorliegenden Erfindung ist es, bei einem Verfahren der eingangs genannten Art für eine wirksame Entfernung von Stickoxiden und Ruß zu sorgen.

Diese Aufgabe wird erfindungsgemäß dadurch gelöst, daß der sich an den Katalysatorflächen ansetzende Ruß durch Abbrennen und/oder durch Beimischen von Sand, Asche oder dergleichen Abriebgemenge in den Abgasstrom vor den Katalysatoren durch Reibwirkung entfernt wird.

*2*

Nach der Erfindung werden also vorzugsweise Katalysatoren mit sogenannten Freipassagen in Loch-, Rohr- oder Plattenform eingesetzt. Hierauf ist die Erfindung jedoch nicht beschränkt. Das Stickoxid wird wie üblich bei 320 bis 350° C unter Beimischen von Ammoniak vermindert. Der sich in den Katalysatorflächen, beispielsweise den Freipassagen, ansetzende Ruß wird entweder durch Abbrennen, soweit dies möglich ist, entfernt oder durch einen künstlichen Sand, Asche oder sonstigen Abriebregen abgerieben.

Als Abriebgemenge von Sand, Asche oder dergleichen hat sich ein solches mit einer Teilchengröße zwischen etwa 0,1 und 1 mm als besonders vorteilhaft erwiesen. Eine gute Abriebwirkung für den Ruß erzielt man ferner, wenn der Abgasstrom mit einer Geschwindigkeit von wenigstens 5 m/s durch die Katalysatoren gefördert wird.

Mit der Erfindung wird ferner vorgeschlagen, das Abriebgemenge dem Abgasstrom intermittierend zuzuführen, um auf diese Weise die abgelagerte Rußschicht intermittierend zu entfernen.

Ein weiteres Erfindungsmerkmal ist darin zu sehen, daß das die Katalysatoren verlassende Abriebgemenge pneumaisch im Kreislauf den Katalysatoren wieder zurückgeführt wird, so daß die neue Beimischung von Abriebgemenge entsprechend reduziert ist.

Für die pneumatische Rückführung des Abriebgemenges kann man vorteilhafterweise einen Teil des die Katalysatoren verlassenden stickoxidarmen Abgasstromes verwenden.

In Weiterbildung des Erfindungsgedankens wird ferner vorgeschlagen, daß der in dem die Katalysatoren verlassenden stickoxidarmen Abgasstrom enthaltene Ruß während der Kreislaufförderung verbrannt wird.

Wenn man gemäß einem weiteren Erfindungsmerkmal dem Abgasstrom vor den Katalysatoren und/oder dem im Kreislauf zurückgeführten stickoxidarmen Abgasstrom ein Zündhilfsmittel für den Ruß zugibt, kann der Ruß wenigstens teilweise an den Katalysatorflächen abgebrannt und/oder im Flugstrom des Abriebgemengekreislaufes verbrannt werden.

Es ist auch möglich, den Überschußruß einer Feuerung zuzuführen.

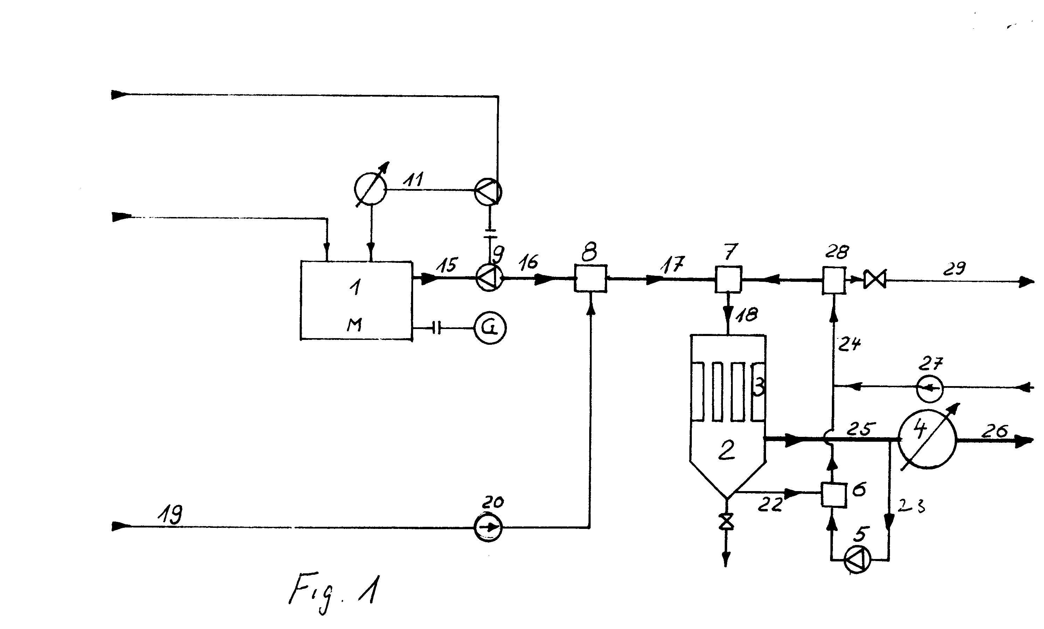

Weitere Ziele, Vorteile, Merkmale und Anwendungsmöglichkeiten der vorliegenden Erfindung ergeben sich aus der nachfolgenden Beschreibung eines Durchführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung. Ersichtlich bezieht sich also die Erfindung auch auf die anlagenmäßige Realisierung für die Verwirklichung des zuvor geschilderten Verfahrens.

Die einzige Zeichnung veranschaulicht ein Anlagenschema der Erfindung.

Gemäß der Zeichnung wird der aus einer Schwerölmaschine 1 kommende Abgasstrom über eine Leitung 15, einen Abgasturbo 9 und eine Leitung 16 zu einem $NH_3$-Mischer 8 geleitet, worin eine gute Mischung des Abgases mit $NH_3$ erfolgt, welches aus einer Leitung 19 über eine Dosiereinrichtung 20 zugeführt wird. Die Temperatur des Gemisches beträgt in der anschließenden Leitung 17 etwa 400 °C. Über einen weiter unten noch zu erläuternden Mischer 7 und eine Leitung 18 wird das Gemisch aus Abgas und $NH_3$ zu einem isolierten Reaktor 2 geleitet, worin ein Freipassagen-Katalysator 3 eingebaut ist. Mit etwa 405 °C wird das stickoxidarme Abgas über eine Leitung 25, einen Wärmetauscher 4 und eine Leitung 26 ins Freie geleitet. Am Katalysator 3 anhaftender Ruß wird durch eine in dem Mischer 7 dem Abgasstrom beigefügte Abriebgemenge aus beispielsweise Sand, Asche oder dergleichen Staub mit einer Korngröße von vorzugsweise bis maximal 1 mm von den Katalysatorflächen abgerieben. Das Bemischen des Abriebgemenges kann in Zeitintervallen erfolgen. Der Ruß und das Abriebgemenge sammeln sich im unteren Teil des Reaktors 2, soweit der Ruß nicht als Überschußruß über die Leitung 25 ab- und einer Feuerung zugeführt wird. Das Abriebgemenge wird über eine Leitung 22 am unteren Ende des Reaktors 2, einen Mischer 6, einen Abscheider 28, den Mischer 7 und die Leitung 18 pneumatisch im Kreislauf in den Katalysator 3 zurückgeführt. Für die pneumatische Kreislaufführung kann stickoxidarmes Abgas der Leitung 25 entnommen werden. Die Förderung dieses

- 4 -

Abgasanteiles erfolgt über eine Leitung 23 und ein Gebläse 5 in den Mischer 6. Entstehender Feinstaub des Abriebgemisches, z.B. Feinstaubasche, kann in dem Abscheider 28 abgeschieden und über eine Leitung 29 ausgeschleust werden. Zur Verbrennung von Überschußruß kann der Leitung 24 ein Zündhilfsmittel, vorzugsweise über eine Dosiereinrichtung 27, zugeführt werden.

Bei einem praktischen Versuch gab ein Schwerölmotor ca. 50.000 m³/h (iN) Rauchgas ab. Die Temperatur hinter dem nachgeschalteten Turbo betrug ca. 390 °C. Es wurden bei einer Stickoxidmenge von ca. 350 ppm etwa 19 m³/h (iN) Ammoniak beigemischt und das Gemisch über ca. 30 m³ Freipassagen-Katalysator geleitet. Der Stickoxidgehalt nach dem Katalysator wurde mit 70 ppm festgestellt. Nach etwa 10 Stunden Betriebszeit wurde an einer kleineren Versuchsmaschine eine Verstopfung des Katalysators durch Ankleben von Ruß festgestellt. Durch Beimischen von feinem Sand im Rauchgasstrom wurde die Blockierung wieder aufgehoben. Auch durch Beimischen einer geringen Menge eines Zündhilfsmittels in den Abgasstrom vor dem Katalysator, beispielsweise Pentan bzw. Heptan gemäß unserer parallelen Patentanmeldung P ... vom gleichen Tage (unser Aktenzeichen PA 3491) konnte der Freipassagen-Katalysator ohne übergroße Temperaturerhöhung wieder freigebrannt werden, jedoch wurden Rückstände am Katalysator festgestellt, die nicht verbrennbar waren.

5

Bezugszeichenliste:

1   Schwerölmaschine
2   Reaktor
3   Katalysator
4   Wärmetauscher
5   Gebläse
6   Mischer
7   Mischer
8   $NH_3$-Mischer
9   Abgasturbo
15  Leitung
16  Leitung
17  Leitung
18  Leitung
19  Leitung
20  Dosiereinrichtung
22  Leitung
23  Leitung
24  Leitung
25  Leitung
26  Leitung
27  Dosiereinrichtung
28  Abscheider
29  Leitung

0212043
06.05.1985
KXR/Ke/Sc
PA 3492

DIDIER ENGINEERING GMBH
Alfredstraße 28
4300 Essen 1

Verfahren zum Entfernen von Stickoxiden und Ruß aus
Abgasen von Schwerölmaschinen oder Schwerölfeuerungen

P a t e n t a n s p r ü c h e :

1. Verfahren zum Entfernen von Stickoxiden und Ruß aus Abgasen von Schwerölmaschinen oder Schwerölfeuerungen mittels Freipassagen-Katalysatoren
   bei erhöhten Temperaturen unter Zugabe von Ammoniak in den Abgasstrom
   vor den Katalysatoren, dadurch gekennzeichnet, daß der sich an den Katalysatorflächen ansetzende Ruß durch Abbrennen und/oder durch Beimischen von
   Sand, Asche oder dergleichen Abriebgemenge in den Abgasstrom vor den
   Katalysatoren durch Reibwirkung entfernt wird.

2. Verfahren nach Anspruch 1, dadurch gekennzeichnet, daß das Abriebgemenge
   von Sand, Asche oder dergleichen eine Teilchengröße zwischen etwa 0,1
   und 1 mm hat.

3. Verfahren nach Anspruch 1 oder 2, dadurch gekennzeichnet, daß man den
   Abgasstrom mit einer Geschwindigkeit von wenigstens 5 m/s durch die
   Katalysatoren fördert.

4. Verfahren nach einem der Ansprüche 1 bis 3, dadurch gekennzeichnet, daß
   das Abriebgemenge dem Abgasstrom intermittierend zugeführt wird.

5. Verfahren nach einem der Ansprüche 1 bis 4, dadurch gekennzeichnet, daß
   das die Katalysatoren verlassende Abriebgemenge pneumatisch im Kreislauf
   den Katalysatoren wieder zurückgeführt wird.

-2-

-2-

6. Verfahren nach Anspruch 5, dadurch gekennzeichnet, daß man zur pneumatischen Rückführung des Abriebgemenges einen Teil des die Katalysatoren verlassenden stickoxidarmen Abgasstromes verwendet.

7. Verfahren nach Anspruch 5 oder 6, dadurch gekennzeichnet, daß der in dem die Katalysatoren verlassenden stickoxidarmen Abgasstrom enthaltene Ruß während der Kreislaufförderung verbrannt wird.

8. Verfahren nach einem der Ansprüche 1 bis 7, dadurch gekennzeichnet, daß dem Abgasstrom vor den Katalysatoren und/oder dem im Kreislauf zugeführten stickoxidarmen Abgasstrom ein Zündhilfsmittel für den Ruß zugegeben wird.

9. Verfahren nach einem der Ansprüche 1 bis 8, dadurch gekennzeichnet, daß der Überschußruß einer Feuerung zugeführt wird.

0212043

Fig. 1

**Europäisches Patentamt**

# EUROPÄISCHER RECHERCHENBERICHT

0212043

Nummer der Anmeldung

EP 86 10 0700

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 7, Nr. 268 (C-197)[1413], 30. November 1983; & JP - A - 58 150 439 (MITSUBISHI JUKOGYO K.K.) 07.09.1983 | 1,4 | B 01 D 53/36 B 01 J 23/90 |
| | --- | | |
| A | DE-A-2 838 093 (MITSUBISHI JUKOGYO K.K.) * Ansprüche 1, 2 * | 1,3 | |
| | --- | | |
| A | PATENT ABSTRACTS OF JAPAN, Band 7, Nr. 56 (C-155)[1201], 8. März 1983; & JP - A - 57 207 547 (MITSUBISHI JUKOGYO K.K.) 20.12.1982 | 1,8 | |
| | ----- | | |

RECHERCHIERTE SACHGEBIETE (Int. Cl.4)

B 01 D 53/00
B 01 J 23/00

Der vorliegende Recherchenbericht wurde für alle Patentansprüche erstellt.

| Recherchenort | Abschlußdatum der Recherche | Prüfer |
|---|---|---|
| BERLIN | 22-10-1986 | BERTRAM H E H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82